# EUROPÄISCHE PATENTSCHRIFT

(11) **EP 2 706 861 B1**
(45) Veröffentlichungstag und Bekanntmachung des Hinweises auf die Patenterteilung: **19.12.2018**
(21) Anmeldenummer: 12719708.5
(22) Anmeldetag: 08.05.2012
(51) Int. Cl.: A21C 15/02

(54) **VORRICHTUNG UND VERFAHREN ZUR HERSTELLUNG VON WAFFELBLÖCKEN**
APPARATUS AND METHOD FOR PRODUCING WAFER BOOKS
DISPOSITIF ET PROCÉDÉ DE FABRICATION DE BLOCS DE GAUFRETTES

(30) Priorität: 11.05.2011 AT 6682011
(43) Veröffentlichungstag der Anmeldung: 19.03.2014
(73) Patentinhaber: Haas Food Equipment GmbH, 1210 Wien (AT)
(72) Erfinder: HAAS, Johannes, A-1040 Wien (AT); HAAS, Josef, A-2100 Leobendorf (AT); HADERER, Karl, A-3710 Ziersdorf (AT); JIRASCHEK, Stefan, A-2202 Königsbrunn (AT); REITHNER, Jürgen, A-3562 Schönberg am Kamp (AT); SCHIESSBÜHL, Leopold, A-2013 Göllersdorf (AT); SCHUHLEITNER, Gerhard, A-3721 Limberg (AT)
(74) Vertreter: Puchberger & Partner Patentanwälte
(86) Internationale Anmeldenummer: PCT/EP2012/058410
(87) Internationale Veröffentlichungsnummer: WO 2012/152776

(56) Entgegenhaltungen:
- FR-A- 1 440 310
- US-A1- 2005 244 560
- US-A1- 2008 032 012
- US-B1- 6 190 714

## Beschreibung

Die Erfindung betrifft eine Vorrichtung und ein Verfahren zur Herstellung mehrlagiger mit einer Streichmasse wie beispielsweise einer Creme gefüllter Waffelblöcke, bei welchem ein erster Waffelblockbestandteil entlang einer Förderfläche zu einem Stapelbereich transportiert, dort von einer Greifvorrichtung von der Förderfläche abgehoben wird, wobei anschließend oder gleichzeitig ein zweiter Waffelblockbestandteil entlang der Förderfläche zu dem Stapelbereich transportiert wird.

Verfahren und Vorrichtungen zur Herstellung mehrlagiger mit Creme gefüllter Waffelblöcke sind seit langer Zeit bekannt und in unterschiedlichen Ausführungsformen publiziert.

Beispielsweise ist ein Verfahren bekannt, bei welchem mit Creme beschichtete Waffelblätter in einer ersten Ebene zu einem Stapelort transportiert, dort in eine zweite Ebene angehoben und von unten an den bereits angehobenen Teil des Waffelblocks angefügt werden, wobei jedes beschichtete Waffelblatt zuerst unter den in angehobener Stellung gehaltenen Teil des Waffelblocks geschoben und dann angehoben wird, und der so gebildete Waffelblock in der angehobenen Stellung vom Stapelort entfernt wird.

Dem Stand der Technik entsprechende Stapel- und Pressvorrichtungen zur Herstellung von Waffelblöcken weisen meist einen entlang der Förderfläche der zugeführten Waffelblätter angeordneten einen Anschlag auf, an dem die bewegten Waffelblätter gestoppt und weiteren Waffelblättern zum Zwecke einer Stapelung zugeführt werden. Moderne Waffelbacköfen und moderne Streichmaschinen für Cremen und andere Streichmassen sind eingerichtet um hohe Durchsätze von 60 bis 100 Waffelblätter pro Minute herzustellen bzw. zu bestreichen. Die Übliche Größe der Waffelblätterbeträgt bis zu etwa 400 mm x 800 mm. Zur Verarbeitung derartiger Mengen in kurzer Zeit ist es vonnöten die Stapelung der einzelnen beschichteten oder unbeschichteten Waffelblätter so effizient wie möglich zu gestalten, ohne dabei die Qualität des fertigen Produkts zu beeinträchtigen.

Nachteilig an, dem Stand der Technik entsprechenden Konstruktionen ist, dass die Waffelblätter im Stapelbereich angehalten, gestapelt und wieder beschleunigt werden müssen. Aufgrund der geringen Widerstandsfähigkeit von Waffelblättern, insbesondere von knusprig spröden Flachwaffeln, die in Waffelbacköfen mit verschließbaren Backzangen unter hohem Druck und hoher Temperatur ausgebacken werden, können die Waffelblätter nicht beliebig beschleunigt oder abgebremst werden, da es sonst zu strukturellen Schäden insbesondere Brüchen, Beschädigungen am Blattrand und zu weiteren Beschädigungen kommen kann. Derartig beschädigte Waffelblöcke, beispielsweise mit ausgebrochenem Rand oder Rissen in den Waffelblättern müssen nach dem Herstellungsprozess aussortiert und als Abfall ausgeschieden werden. Ein weiterer Nachteil, der dem Stand der Technik entsprechenden Herstellungsverfahren und deren Vorrichtungen ist, dass die Genauigkeit bei dem Stapelvorgang, insbesondere die exakte deckungsgleiche Positionierung der Waffelblätter übereinander nicht ausreichend gegeben ist. Dadurch kommt es im Randbereich zu teilweisen Überlappungen oder auch zu hervorstehenden einzelnen Waffelblättern. Der Rand muss in weiterer Folge bearbeitet bzw. abgeschnitten werden, was wiederum einen höheren Ausschuss mit sich bringt.

Herkömmliche Vorrichtungen sind beispielsweise aus der US 6,190,714 B1 und der US 2005/244560 A1 bekannt.

Aus der angeführten US 6,190,714 B1 ist ein Verfahren und eine Vorrichtung zur Herstellung von Waffelblöcken bekannt, wobei die Waffelblöcke in einer kontinuierlichen Bewegung gebildet werden.

Aus der angeführten US 2005/244560 A1 ist eine Vorrichtung zum Formen eines flachen Teigstücks, wie beispielsweise von Teigmaterial, das für Tortillas, Pizzas oder ähnliche Lebensmittelgegenstände verwendet wird, bekannt. In diesem Dokument ist ein verschiebbarer Gegenhalter einer Teigpresse offenbart, welcher synchron mit dem Band während des Pressvorgangs verfahren wird.

Aufgabe der folgenden Erfindung ist es nun, ein Verfahren und eine Vorrichtung zur Herstellung mehrlagiger mit einer Streichmasse wie beispielsweise eine Creme gefüllter Waffelblöcke zu schaffen, welche einen hohen Durchsatz erlaubt, insbesondere eine Vielzahl an Waffelblöcken in kurzer Zeit herstellen kann und dabei den hohen Ansprüchen an die Qualität genügt und darüber hinaus den Ausschuss minimiert, einfach und günstig in der Herstellung sowie effizient in der Wartung und im Betrieb ist.

Bei den Waffeln handelt es sich bevorzugt um Flachwaffeln. Zur Herstellung der Waffeln sind beispielsweise Vorrichtungen und Verfahren bekannt bei denen Waffelblätter, insbesondere knusprig spröde Flachwaffeln, die in Zangenbackautomaten gebacken werden, wobei die Waffelblätter bei hohem Druck in geschlossenen und verriegelten Waffelzangen ausgebacken und anschließend gekühlt werden. Die Waffelblätter sind in bevorzugter Weise dünnwandige, knusprig spröde Waffeln mit einer Größe von bis zu 400 x 800 mm. Diese Waffeln werden beispielsweise in zur Bildung von Schnittenblöcken verwendet, die einen schichtförmigen Aufbau, beispielsweise aus abwechselnden Schichten aus Waffelblättern und Cremefüllungen, aufweisen. Schnittenblöcke können beispielsweise aus zwei Waffelblättern mit einer dazwischenliegenden Cremeschicht, aus zwei Waffelblättern mit mehreren dazwischenliegenden Cremeschichten, aber auch aus einem Aufbau von mehr als 2 Waffelblattschichten bestehen, wobei jeweils zwischen zwei Waffelblättern eine oder mehrere Cremeschichten angeordnet sind. In den meisten Fällen weisen die Schnittenblöcke an zwei außenliegenden Flächen jeweils ein Waffelblatt auf. Die abschließenden Schichten sind somit als Waffelblätter ausgeführt.

Aufgabe der vorliegenden Erfindung ist es nun ein Verfahren und eine Vorrichtung zur Herstellung mehrlagiger mit einer Streichmasse gefüllter Waffelblöcke zu schaffen, wobei ein hoher Durchsatz erzielt wird, dabei die Waffelblockbestandteile exakt übereinander positioniert werden, die Waffelblockbestandteile so schonend wie möglich verarbeitet werden und wobei die Vorrichtung günstig in der Herstellung und günstig in der Wartung ist.

Die erfindungsgemäße Aufgabe wird dadurch gelöst, dass der erste Waffelblockbestandteil auf den zweiten Waffelblockbestandteil von oben in einem Fügevorgang aufgesetzt und/oder angepresst wird.

Ferner zeichnet sich die vorliegende Erfindung dadurch aus, dass der erste Waffelblockbestandteil und der zweite Waffelblockbestandteil zu jedem Zeitpunkt des Fügevorgangs dieselbe Geschwindigkeit in Förderrichtung aufweisen, wobei die Geschwindigkeit ungleich null ist, dass der erste Waffelblockbestandteil von einer Greifvorrichtung in einer, in Förderrichtung vorderen Position von der Förderfläche abgehoben und in einer, in Förderrichtung hinteren Position auf einen nachfolgenden Waffelblockbestendteil aufgesetzt wird und dass der erste Waffelblockbestandteil und der zweite Waffelblockbestandteil gemeinsam von der Greifvorrichtung in einer, in Förderrichtung vorderen Position von der Förderfläche abgehoben und zu einer in Förderrichtung hinteren Position auf einen nachfolgenden Waffelblockbestandteil aufgesetzt werden. In vorteilhafter Weise ist das Verfahren dadurch gekennzeichnet, dass die Waffelblockbestandteile von einer ersten Transportvorrichtung in den Stapelbereich transportiert werden, dass der erste Waffelblockbestandteil aus zwei deckungsgleich, parallel übereinanderliegenden Waffelblättern gebildet ist, wobei zwischen den Waffelblättern zumindest eine Schicht aus einer Streichmasse wie beispielsweise einer Creme vorgesehen ist und dass der zweite Waffelblockbestandteil aus einem Waffelblatt gebildet ist, welches auf einer Flachseite, bevorzugt auf der, dem Greifer zugewandten Seite, eine Schicht aus einer Streichmasse wie beispielsweise eine Creme aufweist.

An der erfindungsgemäßen Vorrichtung zur Herstellung mehrlagiger mit einer Streichmasse wie beispielsweise einer Creme gefüllter Waffelblöcke, mit einer ersten Transportvorrichtung zum Transport der Waffelblockbestandteile entlang der Förderfläche in Förderrichtung und einer Greifvorrichtung zur Stapelung der Waffeiblockbestandteile, ist vorteilhaft, dass die Greifvorrichtung einen Greifer umfasst, der zumindest abschnittsweise entlang der Förderfläche bewegbar angeordnet ist, dass der Greifer zumindest entlang zweier translatorischer Freiheitsgrade bewegbar ist, dass zumindest ein Greifarm zur Bewegung des Greifers (5) vorgesehen ist und dass die Greifarme jeweils zumindest einen Antrieb aufweisen.

Ferner entspricht es dem Erfindungsgedanken, dass ein Gegenhalter vorgesehen ist, dass der Gegenhalter entlang der Förderfläche in und gegen die Förderrichtung verschiebbar angeordnet ist und dass der Greifer im Wesentlichen normal zum Gegenhalter verschiebbar angeordnet ist.

Ferner ist in positiver Weise anzumerken, dass der Greifer im Wesentlichen parallel zum Gegenhalter translatorisch verschiebbar angeordnet ist und dass der Greifer als Unterdruckplatte ausgeführt ist und Öffnungen aufweist, die zumindest teilweise von einem ersten Waffelblockbestandteil verschließbar sind.

Im Folgenden wird die Erfindung anhand einiger Ausführungsbeispiele detaillierter beschrieben:

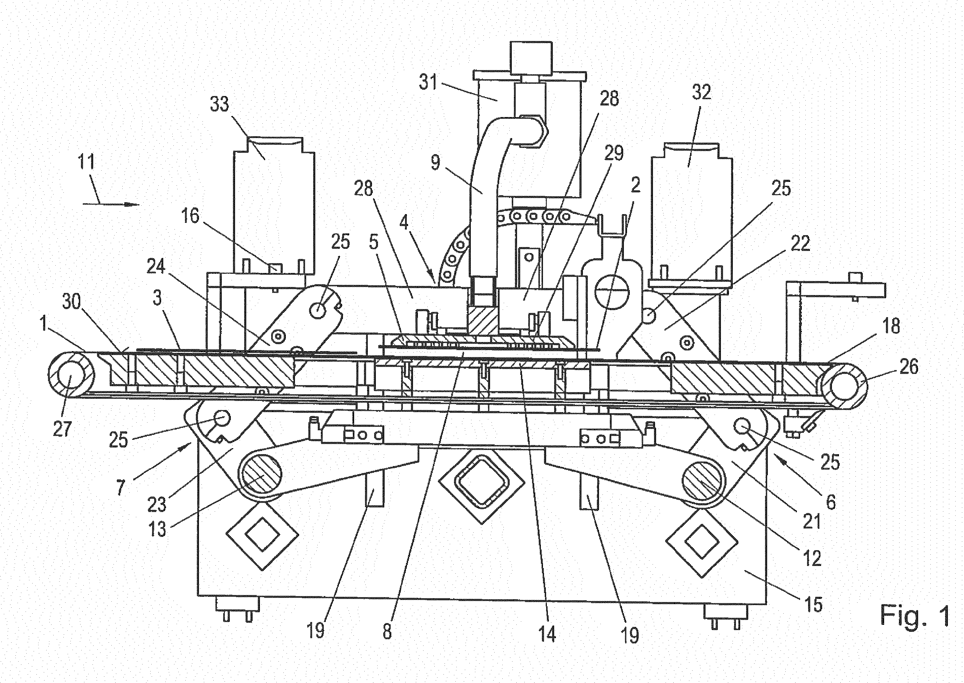

Fig. 1 zeigt eine erfindungsgemäße Vorrichtung in einer schematischen Schnittdarstellung mit einer ersten Transportvorrichtung 1 auf der die Waffelblockbestandteile entlang der Förderfläche 30 Richtung Stapelbereich 8 transportiert werden. Im Stapelbereich 8 ist eine bewegliche Greifvorrichtung 4 angeordnet, die wesentliche Teile des Verfahrens wie beispielsweise Stapeln, Pressen, Anheben, Absenken etc. übernimmt. Die Greifvorrichtung 4 umfasst einen Greifer 5. Dieser ist in der vorliegenden Ausführung als Unterdruckplatte ausgeführt und weist auf seiner, der ersten Transportvorrichtung 1 abgewandten Seite, eine Unterdruckleitung 9, eine Unterdruckpumpe 10 sowie einen Luftfilter 31 zum Schutz der Unterdruckpumpe 10 auf. An, der ersten Transportvorrichtung zugewandten Seite weist der Greifer 5 Öffnungen bzw. Kavitäten auf, welche zumindest teilweise von dem angesaugten Waffelblatt bzw. dem angesaugten ersten Waffelblockbestandteil 2 verschlossen werden können. Durch das Verschließen der Öffnungen kann ein Unterdruck aufgebaut werden, welcher das Waffelblatt oder den Waffelblockbestandteil mit einer Haltekraft an dem Greifer 5 hält.

Ferner weist die Greifvorrichtung 4 einen Grundkörper 28 auf, welcher mit dem Greifer 5 verbunden ist. Die Greifarme, insbesondere der vordere Greifarm 6 und der hintere Greifarm 7 sind beweglich mit dem Greifer 5 und/oder mit dem Grundkörper 28 verbunden. Die Bezeichnung "hinten" bezieht sich auf die in Förderrichtung 11 hintere Position.

Die Greifarme weisen jeweils Antriebe auf, wobei der vordere Greifarm einen vorderen Antrieb 12 und der hintere Greifarm einen hinteren Antrieb 13 aufweist. Diese sind in der vorliegenden Ausführungsform von den Motoren 32, 33 angetrieben. Der vordere Motor 32 treibt über ein Getriebe den vorderen Antrieb 12 an und der hintere Motor 33 treibt über ein weiteres Getriebe den hinteren Antrieb 12 an. Ferner weist die Greifvorrichtung eine Vielzahl von Führungselementen auf, durch die die Kinematik bzw. die Freiheitsgrade und deren Bewegungsfreiheit bestimmt sind. Des Weiteren ist im Stapelbereich 8 ein Gegenhalter 14 vorgesehen. Dieser Gegenhalter ist derart angeordnet, dass sich das Waffelblatt bzw. der Waffelblockbestandteil im Stapelbereich zwischen dem Greifer 5 und dem Gegenhalter 14 befindet. Der Gegenhalter ist angeordnet, um der Kraft des Greifers 5, welche in unterschiedlichen Prozessabschnitten Richtung erste Transportvorrichtung 1 gerichtet ist, entgegenzuwirken.

Die gesamte Vorrichtung ist an einem Maschinengestell 15 angeordnet, welches wiederum über, hier nicht dargestellte Vorrichtungen an der restlichen Maschine oder am Boden fixiert sein kann.

Darüber hinaus ist zumindest ein Detektor 16 vorgesehen. Der Detektor ist mit einer nicht dargestellten Steuerungseinheit 17 verbunden und dient der Bestimmung des Zeitpunkts des Eintritts des Waffelblockbestandteils sowie zur Synchronisierung und Steuerung der Bewegung der Greifvorrichtung 4 insbesondere der Greifarme 6, 7. Auch der Greifer, die Greifvorrichtung, die Unterdruckpumpe, die erste Transportvorrichtung und/oder die Antriebe der Transportarme etc. können von der Steuerungseinheit 17 gesteuert sein.

Das Verfahren zur Bildung von Waffelblöcken erfolgt in mehreren Schritten:
Waffelblätter werden in einem Zangenbackofen gebacken und einer Kühlvorrichtung zugeführt. Diese Kühlvorrichtung fördert die ausgebackenen, knusprig spröden dünnen flächenförmigen Waffelblätter zu einer Transportvorrichtung. In weiterer Folge werden Waffelblätter einseitig mit einer Streichmasse, insbesondere einer Creme oder mehreren Schichten einer Streichmasse bestrichen. Das Auftragen der Streichmasse geschieht in Streichvorrichtungen wie beispielsweise Kontaktstreichvorrichtungen, Walzenstreichvorrichtungen, Filmstreichvorrichtungen oder durch Auftragen durch Düsen oder ähnliche Vorrichtungen. Die einseitig beschichteten Waffelblätter werden in weiterer Folge übereinander gestapelt, um somit einen mehrschichtigen Aufbau zu bilden. Üblicherweise gibt es Waffelblöcke mit zwei, drei, vier, fünf und mehr Schichten von Waffelblättern, wobei zwischen den Waffelblättern jeweils eine oder mehrere Schichten einer Creme vorgesehen sind. Meist ist die oberste und die unterste Schicht des Waffeiblocks aus jeweils zumindest einem Teil eines Waffelblattes gebildet,

Um nun einen Waffelblock zu bilden, wird ein erster Waffelblockbestandteil 2 durch die erste Transportvorrichtung 1 in den Stapelbereich 8 gefördert. Die erste Transportvorrichtung 1 ist als Bandförderer ausgebildet und weist ein angetriebenes Band 18 auf, das über eine Umlenkrolle zurückgeführt ist. Weitere Möglichkeiten zur Förderung der Waffelbiockbestandteile sind beispielsweise Riemenförderer, Walzenförderer, etc.

Der erste Waffelblockbestandteil ist in bevorzugter Weise dreischichtig aufgebaut und weist zwei außenliegende Waffelblätter auf, welche mit einer dazwischen liegenden Cremefüllung gefüllt sind. Der erste Waffelblockbestandteil 2 wird nun mit einer bestimmten Geschwindigkeit von der ersten Transportvorrichtung in den Stapelbereich transportiert. Der beweglich angeordnete Greifer 5 wird in Förderrichtung 11, zumindest kurz vor dem Greifvorgang mit derselben Geschwindigkeit in Förderrichtung mitbewegt und von oben auf den ersten Waffelblockbestandteil 2 aufgesetzt. Der Greifer 5 ist dabei von den Greifarmen 6, 7 in einer hinteren Stellung auf den, auf der ersten Transportvorrichtung liegenden ersten Waffelblockbestandteil 2 gedrückt. Durch den ersten Waffelblockbestandteil sind die Kavitäten des Greifers 5 geschlossen, wobei sich bedingt durch die Unterdruckpumpe 10 und die angeschlossene Unterdruckleitung 9 in den Kavitäten ein Unterdruck ausbilden kann. Aus dem Unterdruck resultiert über die Fläche des angesaugten Waffelblockbestandteils eine Haltekraft mit der der erste Waffelblockbestandteil an dem plattenförmigen Greifer 5 gehalten ist. Dabei ist anzumerken, dass sich während des Vorgangs des Aufsetzens und des Ansaugens der Greifer mit der ersten Transportvorrichtung und dem ersten Waffelblockbestandteil 2 in Förderrichtung 11 mitbewegt.

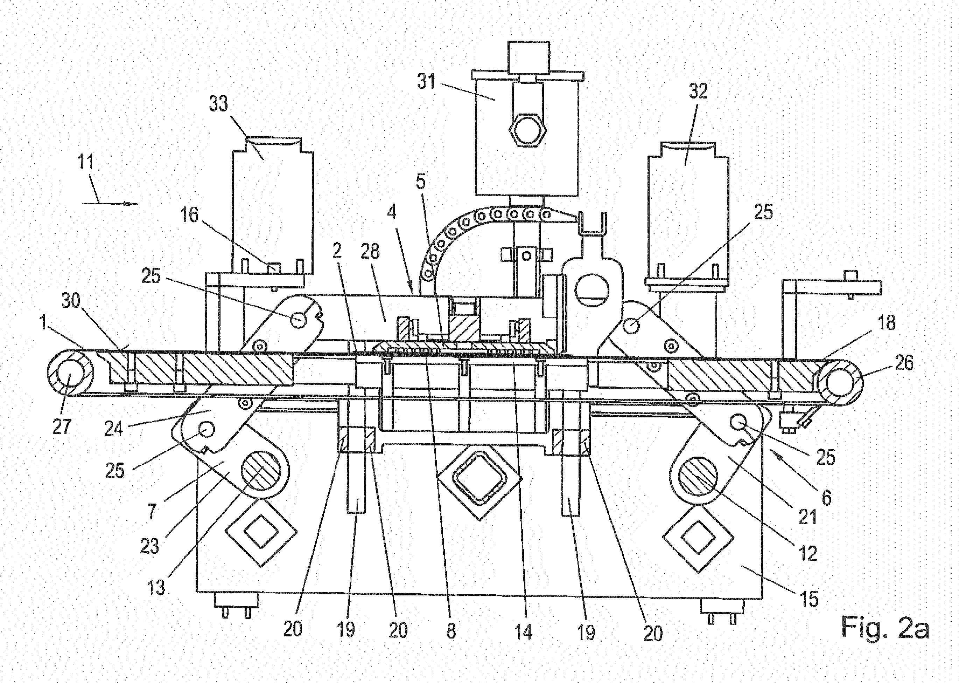

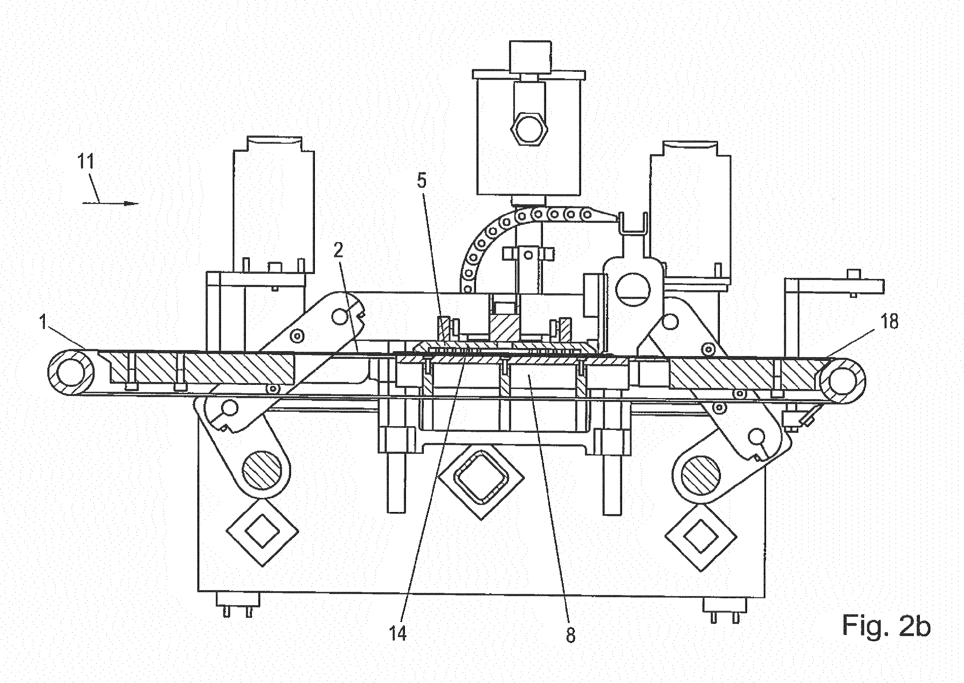

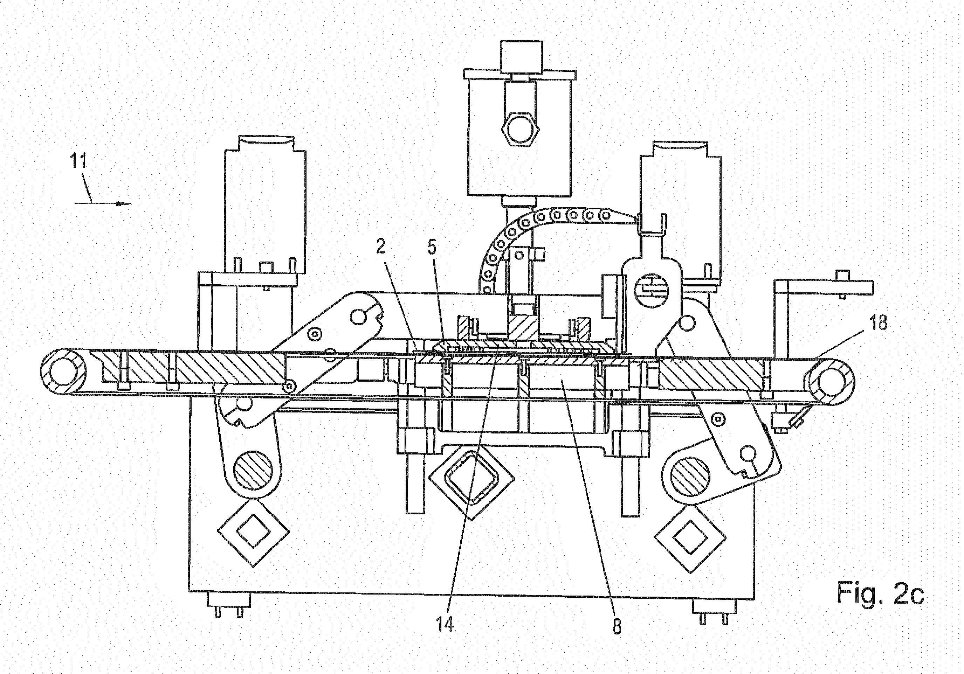

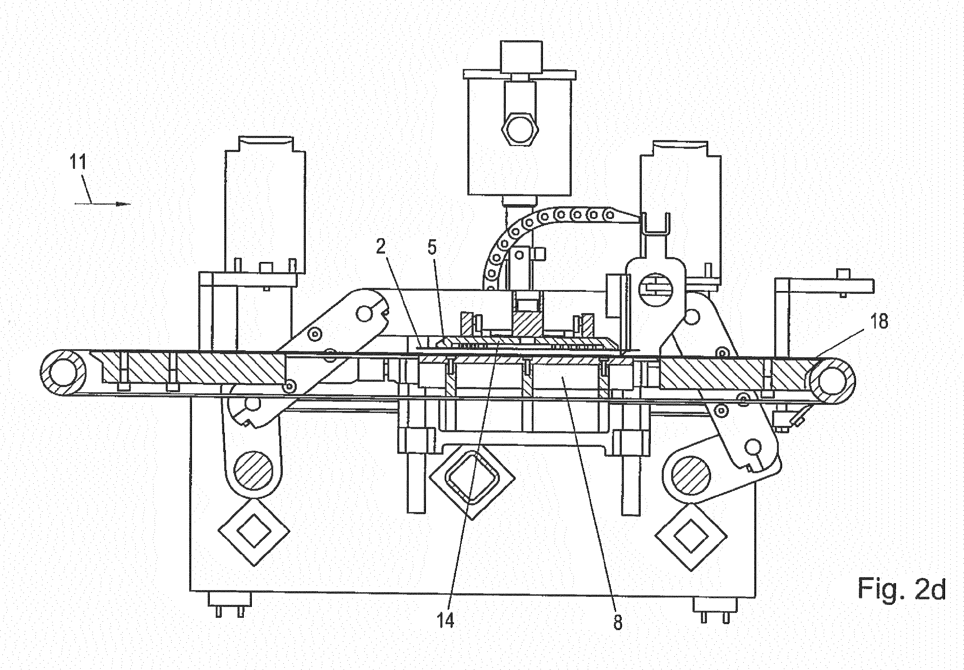

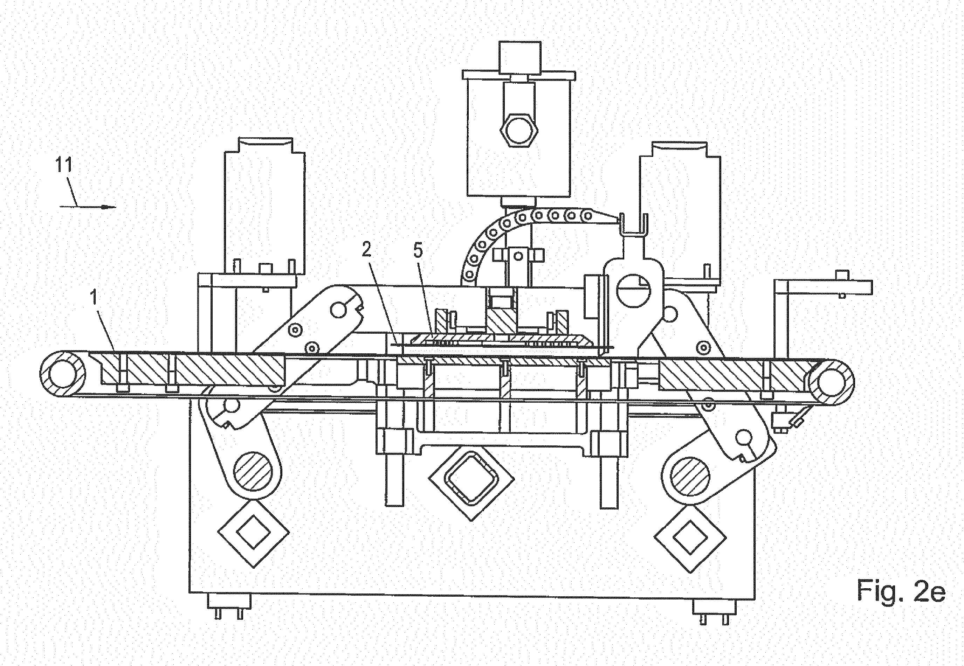

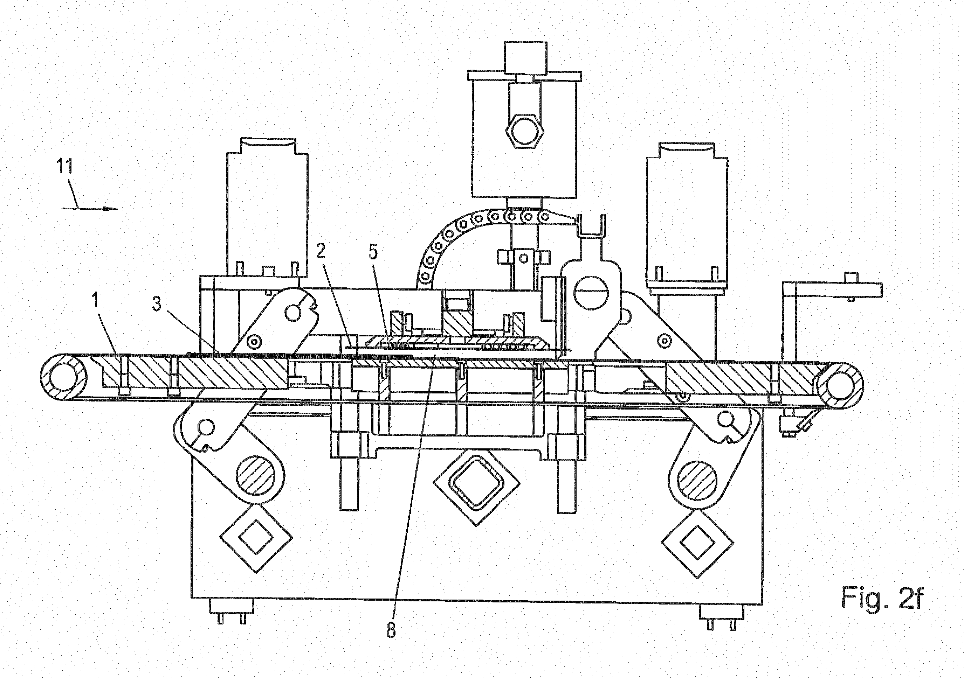

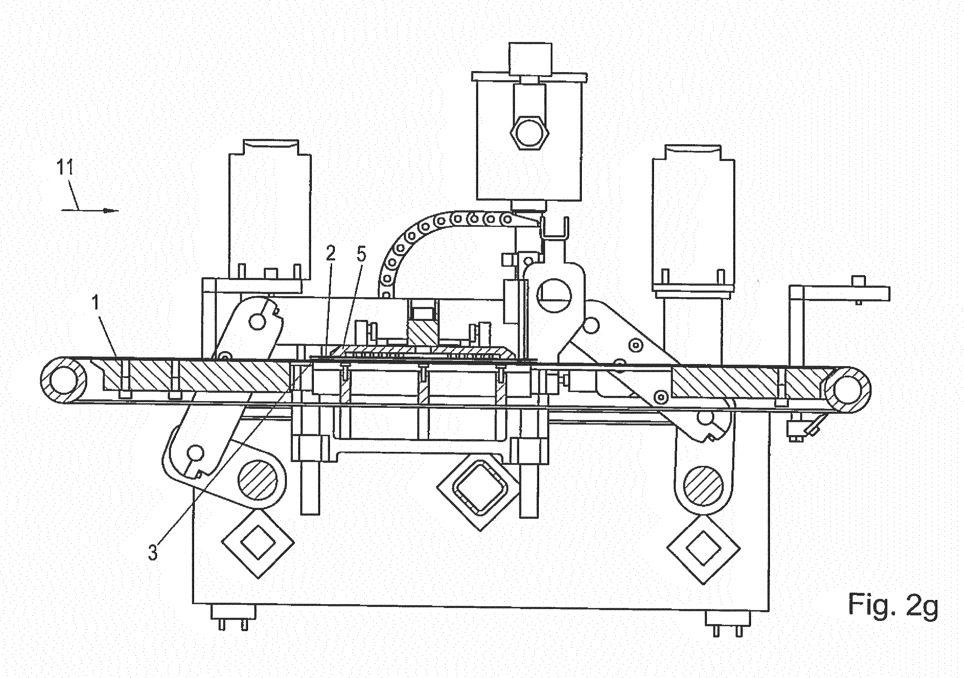

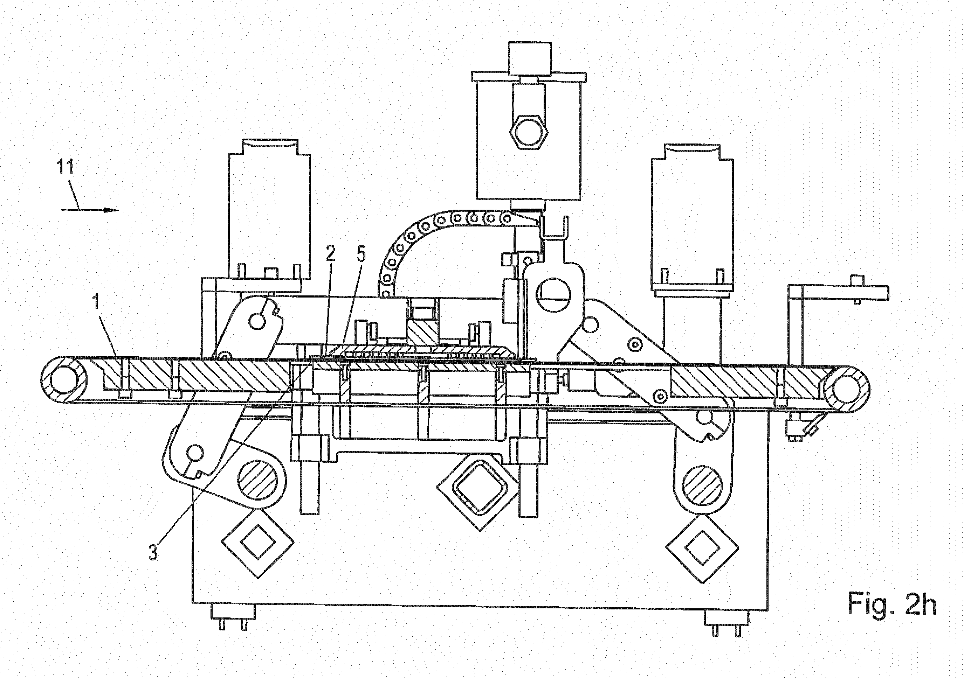

Fig. 2 zeigt eine Stellung der erfindungsgemäßen Vorrichtung bei dem der Greifer 5 auf den ersten Waffelblockbestandteil aufgesetzt ist und von einer hinteren Stellung wie in Fig. 2a gezeigt in eine vordere Stellung wie in Fig. 2b gezeigt bewegt wird. Während der Bewegung von der hinteren in die vordere Stellung kann der Greifer zusätzlich zu der Bewegung in Förderrichtung zusätzliche Bewegungen normal zur Förderrichtung insbesondere Richtung ersten Waffelblockbestandteil 2 und weiter Richtung Band 18 ausführen. Um eine Durchbiegung des Bandes 18 der ersten Transportvorrichtung 1 zu verhindern, ist unterhalb des Greifers 5 ein Gegenhalter 14 vorgesehen. Dieser ist entlang der Förderrichtung 11 und der Förderfläche 30 verschieblich angeordnet, jedoch gegen eine Verschiebung in vertikaler Richtung blockiert. Wird nun der Greifer auf den ersten Waffelblockbestandteil aufgepresst, so überträgt sich diese Kraft in weiterer Folge auf das Band 18, welches sich wiederum auf dem Gegenhalter 14 abstützt. Der Gegenhalter ist ebenso wie der Greifer 5 mit der Geschwindigkeit des ersten Waffelblockbestandteiles mitgeführt. In bevorzugter Weise entsteht somit zwischen den Bestandteilen Greifer 5, erster Waffelblockbestandteil 2, Band 18 und Gegenhalter 14 im Stapelbereich 8 kein Schlupf. Der gesamte Verbund bewegt sich entlang der Förderfläche 30 nun bis zum Ende des Stapelbereichs 8 weiter. Dort wird, wie in Fig. 2c dargestellt ist, der Greifer von dem Band 18 der ersten Transportvorrichtung 1 abgehoben. Durch die Haltekraft wird der erste Waffelblockbestandteil 2 ebenfalls abgehoben und von dem Band 18 entfernt. Die Bewegung des Greifers 5 geschieht durch Steuerung der Antriebe 12, 13 der Greifarme 6, 7. Während dieses Vorganges weicht die Geschwindigkeit der Greiferplatte im Wesentlichen von der Geschwindigkeit des Bandes 18 in Förderrichtung 11 ab. In weiterer Folge wird der Greifer 5 weiter von dem Band 18 entfernt und in vertikaler Richtung angehoben. Dies ist in Fig. 2d dargestellt.

Fig. 2e zeigt eine weitere Stellung bei der eine Bewegung des Greifers 5 gegen die Förderrichtung 11 erfolgt. Der Greifer 5 ist von dem vorderen Greifarm 6 und dem hinteren Greifarm 7 gegen die Förderrichtung 11 bewegt und wird, wie in Fig. 2f dargestellt, weiter Richtung einer hinteren Position zurückgeführt.
Nach oder während der Rückführbewegung des Greifers, die in den Figuren 2e-2f dargestellt ist, wird ein zweiter Waffelblockbestandteil 3 durch die erste Transportvorrichtung 1 Richtung Stapelbereich 8 transportiert. Der erste Waffelblockbestandteil 2 und der Greifer 5 sind von der ersten Transportvorrichtung abgehoben, wodurch diese unbehindert den zweiten Waffelblockbestandteil 3 dem Stapelbereich zuführen kann.
Fig. 2g zeigt eine Stellung nahe des hinteren Totpunktes bzw. der maximalen Bewegungsfreiheit des Greifers 5 in der hier dargestellten linken Richtung - also entgegen der Förderrichtung 11. Dabei befindet sich der Greifer 5 über dem zweiten Waffelblockbestandteil 3 und wird parallel zu diesem bewegt. Synchronisiert ist die Bewegung bzw. die Position des Greifers 5 über dem zweiten Waffelblockbestandteil 3 über die Steuerungseinheit 17.
Der Detektor 16, der beispielsweise als Lichtschranke ausgeführt ist, bestimmt die Synchronisation und somit das exakte Aufsetzen des ersten Waffelblockbestandteiles 2 auf den zweiten Waffelblockbestandteil 3. Dazu greift die Steuerungseinheit in die Bewegung der Antriebe 12, 13 der Greifarme 6, 7 ein. Befindet sich der zweite Waffelblockbestandteil 3 im Stapelbereich 8, so wird, wie in Fig. 2g dargestellt, der Greifer samt anhaftendem ersten Waffelblockbestandteil 2 oberhalb des zweiten Waffelblockbestandteiles 3 mit derselben Geschwindigkeit mitgeführt und in weiterer Folge, wie in Fig. 2h dargestellt, auf diesen aufgesetzt. Der zweite Waffelblockbestandteil ist in bevorzugter Weise zweischichtig ausgeführt und weist auf seiner unteren, auf dem Band 18 liegenden Seite ein Waffelblatt und auf der, dem Greifer 5 zugewandten Seite eine Schicht aus einer Creme oder einer Streichmasse auf. Dabei wird der erste Waffelblockbestandteil exakt deckungsgleich auf den zweiten Waffelblockbestandteil aufgepresst, wodurch ein Waffelblock entsteht, der im vorliegenden Fall aus drei Schichten Waffelblättern mit dazwischenliegenden zwei Schichten aus Cremefüllung besteht.
Wiederum wird der Greifer in Richtung Band 18 gedrückt. Als Widerlager für den Druck bzw. die daraus resultierende Kraft ist der, in Förderrichtung 11 geführte Gegenhalter 14 vorgesehen. Bei diesem Vorgang bewegen sich der Greifer 5, der erste Waffelblockbestandteil 2, der zweite Waffelblockbestandteil 3, der obere Teil des Bandes 18 und der Gegenhalter 14 mit derselben Geschwindigkeit in Förderrichtung 11. Während der Bewegung von einer hinteren Stellung in eine vordere Stellung kann wiederum neben der Bewegung in Förderrichtung auch eine Bewegung normal zur Förderrichtung, insbesondere zum Aufeinanderpressen des ersten Waffelblockbestandteiles auf den zweiten Waffelblockbestandteil erfolgen.
Der Aufsetz- und Pressvorgang erfolgt wie in den Fig. 2a und 2b dargestellt.
Am Ende des Stapelbereichs 8 wird nun der Verbund des ersten Waffelblockbestandteils 2 mit dem zweiten Waffelblockbestandteil 3 abgehoben, der durch Adhäsion der Creme mit dem ersten Waffelblockbestandteil verbunden ist, welcher wiederum durch die Haltekraft an dem Greifer anhaftet.

Nun wird der Waffelblock von dem Band abgehoben und wie in den Figuren 2c bis 2g zu sehen ist in eine hintere Stellung zurückgeführt. In der Zwischenzeit kann ein dritter Waffelblockbestandteil zugeführt werden und wie zuvor der zweite Waffelblockbestandteil, mit den am Greifer gehaltenen Waffelblockbestandteilen verbunden werden.

Dabei wird der Greifer 5 entlang einer durch die Steuerungseinheit 17 gesteuerten, kreisartigen Kontur bewegt. Die Bewegung ist insbesondere in den Figuren 2a bis 2h dargestellt, wobei zur Stapelung von mehreren Waffelbestandteilen diese Kreisbewegung beliebig oft wiederholbar ist. Bei der Stapelung von mehreren, beispielsweise drei Waffelblockbestandteilen würde als nächster Schritt nach der in Fig. 2h dargestellten Stellung wiederum eine Stellung ähnlich der Fig. 2a folgen. Dabei ist jedoch der Greifer 5 um einen gewissen Betrag in vertikaler Richtung höher positioniert als in dem ersten Durchgang der kreisförmigen Bewegung. Dieser Betrag entspricht im Wesentlichen der Höhe des bisher gebildeten Waffelblocks. Die Positionen der Fig. 2a bis 2h folgen demnach aufeinander in einem kontinuierlich bewegten Prozess, wobei die Reihenfolge der Stellungen der alphabethischen Reihenfolge der Fig. 2a bis 2h entspricht.

Zum Aufsetzen des bestehenden, am Greifer 5 gehaltenen Waffelblocks auf einen weiteren, folgenden Waffelblockbestandteil wird der Greifer und der darauf befindliche Waffelblock oberhalb des bewegten nachfolgenden Waffelblockbestandteiles mitgeführt und in einer, gegenüber dem folgenden Waffelblockbestandteil im Wesentlichen senkrechten Bewegung aufgesetzt. Beide Teile, also der Greifer 5 und der anzufügende Waffelblockbestandteil bewegen sich in Richtung Förderrichtung 11 mit der Geschwindigkeit der ersten Transportvorrichtung 1. Um das exakte Aufsetzen des Greifers 5 auf den nachfolgenden Waffelblockbestandteil zu erzielen, ist ein Detektor 16 vorgesehen. Dieser detektiert den Zeitpunkt des Eintritts des nachfolgenden Waffelblockbestandteils. Über die Geschwindigkeit der ersten Transportvorrichtung kann nun von der Steuerungseinheit 17 die Bewegung des Greifers 5, insbesondere der Greifarme 6, 7 synchronisiert werden. Anschließend setzt der Greifer mit dem anhaftenden, bestehenden Waffelblock auf den nachfolgenden Waffelblockbestandteil auf und presst diesen im Stapelbereich gegen das Band 18 und in weiterer Folge gegen den Gegenhalter 14. Durch die plattenförmige Ausgestaltung des Greifers 5 und des Gegenhalters 14 kann durch den ausgeübten Druck die Höhe des Waffelblocks in gewissen Bereichen verändert werden. Insbesondere bei der Massenfertigung ist es von großer Wichtigkeit, dass das fertige Produkt gewissen Maßtoleranzen entspricht. Zu diesem Zweck werden die Waffelblöcke gestapelt, um dann auf ein Normmaß zusammengedrückt zu werden. Dieser Pressvorgang, bei dem der plattenförmige Greifer 5 gegen den Gegenhalter 14 gedrückt wird, geschieht während einer kontinuierlichen Fortbewegung entlang der Förderrichtung 11.

Bei dem Stapelvorgang senkt sich der Greifer, bedingt durch die Dicke der gestapelten Waffelblockbestandteile, bei jedem Durchgang um einen gewissen Betrag weniger Richtung Band 18. Ist die gewünschte Waffelblockdicke bzw. die gewünschte Anzahl der Schichten erreicht, so löst sich der Greifer von dem Waffelblock. In weiterer Folge wird dieser durch die erste Transportvorrichtung abtransportiert.

Alternativ dazu kann aber auch nach dem ersten Durchlauf, d.h. nach dem Aufsetzen und Pressen des ersten Waffelblockbestandteils auf den zweiten Waffelblockbestandteil die Verbindung des Greifers 5 mit dem Waffelblock gelöst werden. Anschließen kann der Waffelblock über die erste Transportvorrichtung abtransportiert werden.

Das Lösen geschieht dabei dadurch, dass an den Greifer kein Unterdruck mehr angelegt wird wodurch die Haltekraft verschwindet und der Waffelblock nicht mehr an dem Greifer gehalten ist. In bevorzugter Weise geschieht diese Trennung, wenn der Waffelblock auf dem Band 18 der ersten Transportvorrichtung 1 liegt.

Anzumerken ist, dass der gesamte Stapelvorgang kontinuierlich geschieht, d.h. die einzelnen Waffelblockbestandteile müssen am Band nicht gestoppt werden, sondern werden während einer gleichförmigen Bewegung von diesen aufgehoben und miteinander verbunden.

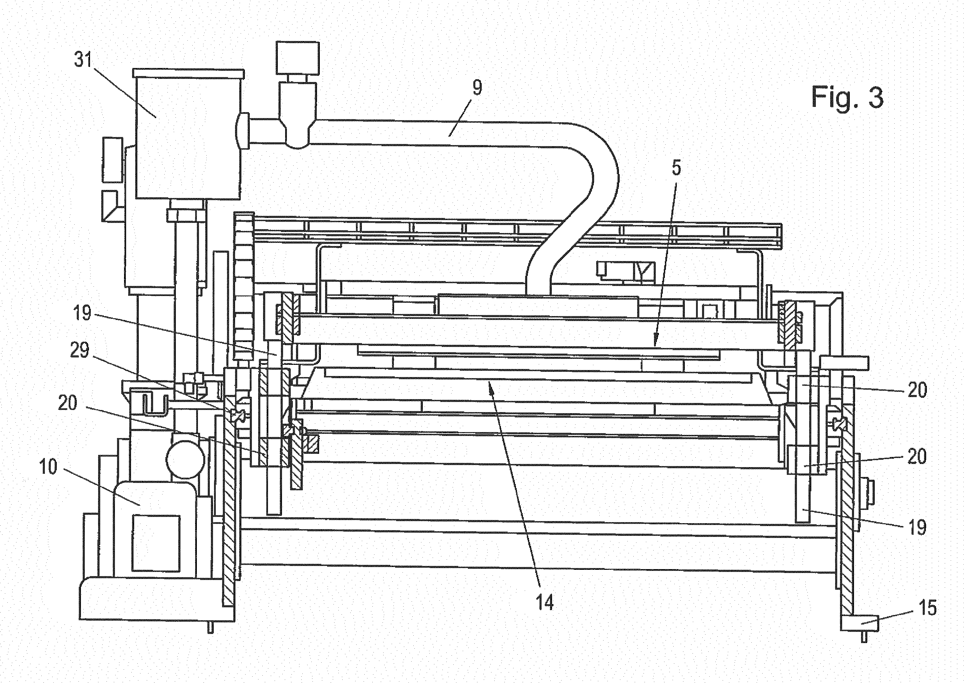

Fig. 3 zeigt eine schematische Ansicht der erfindungsgemäßen Vorrichtung, wobei die dargestellten Elemente teilweise geschnitten dargestellt sind. Die Blickrichtung folgt im Wesentlichen der Förderrichtung 11 aus Fig. 1.

Die Vorrichtung umfasst eine Greifvorrichtung 4 mit einem Greifer 5 und einem Gegenhalter 14. Der Greifer 5 und der Gegenhalter 14 weisen kinematische Zwänge zueinander auf. So sind die beiden Platten parallel zueinander geführt. Ein Kippen der einen Platte gegenüber der anderen ist nur im Bereich eines geringen Spiels der Führungselemente möglich. Diese Parallelführung des Greifers 5 und dem Gegenhalter 14 ist über Bolzen 19 und Buchsen 20 ausgeführt. Dabei ist eine Vielzahl an Buchsen 20 an dem einen Element vorgesehen, in welchen Bolzen 19 geführt, verschiebbar angeordnet sind, die mit dem jeweiligen anderen Element verbunden sind. In der vorliegenden Ausführung sind vier Bolzen 19 fest mit dem Greifer 5 und/oder dem Grundkörper 28 des Greifers verbunden. Die Bolzen verlaufen im Wesentlichen vertikal bzw. normal zur Förderrichtung 11 und zur Haupterstreckungsrichtung des plattenförmigen Greifers 5. Die Bolzen 19 ragen in Buchsen 20, welche fest mit dem Gegenhalter 14 verbunden sind. Die Buchsen weisen Öffnungen auf, in welche die Bolzen 19 eingeführt werden können. Die Öffnungen der Buchsen sind derart ausgebildet, dass nur eine lineare Bewegung der Bolzen ermöglicht ist. Die Richtung der linearen Bewegung entspricht im Wesentlichen einer Normalen auf die Haupterstreckungsrichtung des plattenförmigen Greifers 5. Ferner sind die Komponenten Unterdruckpumpe 10, Luftfilter 31 und Unterdruckleitung 9 zur Erzeugung der Haltekraft vorgesehen.

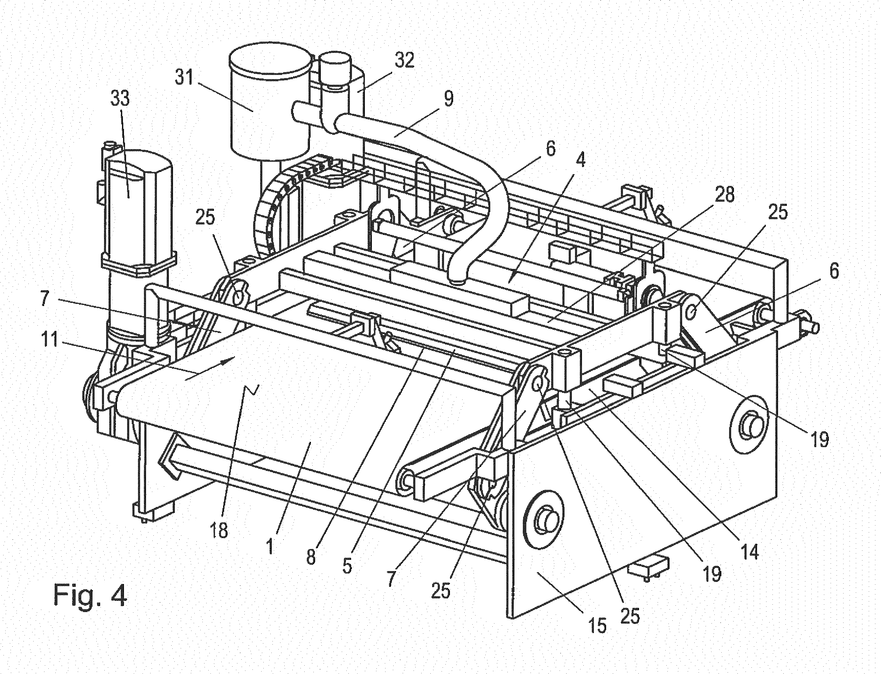

Der Gegenhalter 14 ist im vorliegenden Fall plattenförmig ausgeführt und linear entlang der Förderrichtung verschiebbar angeordnet. Insbesondere ist der Gegenhalter 14 im Stapelbereich 8 verschiebbar angeordnet. Kinematisch bedeutet dies, dass der Gegenhalter 14 lediglich linear entlang der Förderrichtung bewegt werden kann. Die Führung ist durch die Anordnung eines Linearführungselementes 29 gegeben. Der Greifer 5 wiederum kann gegenüber dem Gegenhalter 14 ausschließlich parallel und linear bewegt werden. Jedoch ist die Richtung der translatorischen Bewegung des Greifers 5 gegenüber dem Gegenhalter 14 normal auf die Förderrichtung - im vorliegenden Fall vertikal - während die mögliche Bewegungsrichtung und die Richtung des translatorischen Freiheitsgrades des Gegenhalters 14 der Förderrichtung folgend also im vorliegenden Fall waagrecht verläuft. Durch die Konfiguration dieser Kinematik kann der Greifer 5 somit vertikal als auch horizontal bewegt werden. Die Bewegung geschieht über den vorderen Greifarm 6 und den hinteren Greifarm 7, welche einerseits am Maschinengestell 15 und andererseits an dem Greifer 5 und/oder am Grundkörper 28 angreifen. Anzumerken ist, dass auch je zwei vordere Greifarme und je zwei hintere Greifarme angeordnet sein können - wie beispielsweise auch in Fig. 4 dargestellt.

Der vordere Greifarm 6 umfasst einen vorderen Antrieb 12. Dieser Antrieb ist als Drehantrieb ausgeführt und weist in dessen Zentrum eine Drehachse auf, um die der erste Arm 21 drehbar angeordnet ist. Der vordere Motor 32 treibt dabei über ein Getriebe den vorderen Antrieb an. Der erste Arm 21 weist an seinem, dem vorderen Antrieb 12 abgewandten Ende ein Rotationslager 25 auf, über welches er mit dem zweiten Arm 22 verbunden ist. Dieses Rotationslager ist beispielsweise als Bolzen-Buchsenverbindung ausgeführt. Es lässt eine Drehbewegung des zweiten Armes 22 gegenüber dem ersten Arm 21 um die Rotationsachse des Rotationslagers 25 zu. Der zweite Arm 22 ist wiederum an dessen, dem ersten Arm abgewandten Ende über ein Rotationslager 25 mit dem Greifer 5 und/oder dem Grundkörper 28 verbunden. Die Verbindung des zweiten Armes 22 mit dem Greifer 5 lässt ebenfalls die freie Rotation des zweiten Arms 22 um das Rotationslager 25 zu.

Der hintere Greifarm ist ebenso ausgebildet und weist einen vom hinteren Motor 33 angetriebenen hinteren Antrieb 13 auf, welcher einen dritten Arm 23 rotatorisch antreiben kann. Dieser weist auf dem, dem hinteren Antrieb 13 abgewandten Ende wiederum ein Rotationslager 25 auf, über welches er mit dem vierten Arm 24 verbunden ist. Der vierte Arm ist drehbar über ein Rotationslager 25 am Greifer 5 und/oder dem Grundkörper 28 angeordnet. Durch den gesteuerten Antrieb der Antriebe 12, 13 kann die Stellung des Greifers 5 gegenüber dem Maschinengestell 15 in den kinematischen Grenzen gewählt werden. Die Anordnung der Greifarme entspricht im weitesten Sinne der kinematischen Ausgestaltung eines Pleuels, wobei zusätzlich zu der vertikalen Bewegung durch die beiden Antriebe auch eine horizontale Bewegung erwirkt werden kann. Gesteuert sind beide Antriebe durch die nicht dargestellte Steuerungseinheit 17. Zur Verbesserung der Klarheit werden im Folgenden nun die Freiheitsgrade präzisiert:

Die Drehachsen des vorderen Antriebes 12, des hinteren Antriebes 13 und aller Rotationslager 25 verlaufen in Fig. 1 projizierend. Ebenso ist die Drehachse des Antriebs und der Umlenkrolle der ersten Transportvorrichtung projizierend. Der erste Arm 21 und der zweite Arm 22 weisen einen Drehfreiheitsgrad zueinander auf, wobei die Drehachse des Drehfreiheitsgrades der Rotationsachse des Rotationslagers 25 entspricht. Ebenso sind der dritte Arm 23 und der vierte Arm 24 drehbar zueinander angeordnet, wobei die Drehachse der Rotationsachse des Rotationslagers 25 entspricht. Der vierte Arm und der zweite Arm greifen an dem Greifer 5 an. Anzumerken ist, dass die Arme 22 und 24 nicht direkt am Greifer 5 angreifen, sondern an einem, mit dem Greifer 5 verbundenen Grundkörper 28. Der Grundkörper 28 kann starr mit dem Greifer 5 verbunden sein, wobei der Greifer 5 auch gefedert oder begrenzt beweglich gegenüber dem Grundkörper angeordnet sein kann. Der Greifer 5 bzw. der Grundkörper 28 ist gegenüber dem Gegenhalter 14 parallel geführt angeordnet. Der Grundkörper 28 und der Greifer 5 weisen somit einen translatorischen Freiheitsgrad gegenüber dem Gegenhalter 14 auf. Der Gegenhalter 14 wiederum weist einen translatorischen Freiheitsgrad auf, der im Wesentlichen orthogonal zu dem Freiheitsgrad des Greifers 5 verläuft. Der Gegenhalter ist somit translatorisch entlang der Förderrichtung 11 verschiebbar angeordnet und verläuft knapp unterhalb des oberen Abschnitts des Bandes 18. Der Gegenhalter 14 ist verschiebbar zwischen der Oberseite des Bandes und der rücklaufenden, unteren Seite des Bandes angeordnet. Er verläuft demnach direkt unterhalb dem Abschnitt des Bandes, auf dem die Waffelblockbestandteile gefördert werden. In bevorzugter Weise befindet sich der Gegenhalter 14 bedingt durch die Steuerung und die Bewegung der Antriebe 12, 13 im Stapelbereich 8 direkt unterhalb des Waffelblockbestandteils und folgt diesem entlang der Förderrichtung 11.
Fig. 4 zeigt eine Schrägansicht einer erfindungsgemäßen Vorrichtung mit einer ersten Transportvorrichtung 1, einem ersten Waffelblockbestandteil 2, einer Greifvorrichtung 4 mit einem Greifer 5, zwei vorderen Greifarmen 6 und zwei hinteren Greifarmen 7 und einem Grundkörper 28. Der Greifer 5 bewegt sich entlang einer nahezu geschlossenen kreisartigen Kontur, wobei im abgesenkten Bereich eine gerade Führung in Förderrichtung erfolgt, dann eine Abhebbewegung, eine im Wesentlichen geradlinige Rückbewegung und im Anschluss wieder eine Absenkbewegung.
Ferner ist eine Unterdruckleitung 9, eine Unterdruckpumpe 10, ein vorderer Antrieb 12, ein hinterer Antrieb 13 und der Gegenhalter 14 vorgesehen. Starr mit dem Maschinengestell 15 ist des weiteren ein Detektor 16 angeordnet, welcher mit einer nicht dargestellten Steuerungseinheit 17 verbunden ist. Das Band 18 der ersten Transportvorrichtung 1 weist einen Antrieb 26 und eine Umlenkrolle 27 auf. Ferner sind am Grundkörper 28 Bolzen 19 vorgesehen, die in Buchsen 20 des Gegenhalters 14 geführt gelagert sind.
An dieser Stelle sei angemerkt, dass sich die Erfindung nicht auf die angeführten Ausführungsbeispiele beschränkt.

Die Figuren sind zumindest teilweise schematische Darstellungen, wobei die Dimensionen und Proportionen von weiteren, zeichnerisch nicht dargestellten, Ausführungsformen oder Merkmalen sowie von realen Ausführungen abweichen können.

| **Bzgz** | **50 295** |
|---|---|
| 1 | erste Transportvorrichtung |
| 2 | Erster Waffelblockbestandteil |
| 3 | Zweiter Waffelblockbestandteil |
| 4 | Greifvorrichtung |
| 5 | Greiferplatte |
| 6 | vorderer Greifarm |
| 7 | hinterer Greifarm |
| 8 | Stapelbereich |
| 9 | Unterdruckleitung |
| 10 | Unterdruckpumpe |
| 11 | Förderrichtung |
| 12 | Vorderer Antrieb |
| 13 | hinterer Antrieb |
| 14 | Gegenhalter |
| 15 | Maschinengestell |
| 16 | Detektor |
| 17 | Steuerungseinheit |
| 18 | Band |
| 19 | Bolzen |
| 20 | Buchse |
| 21 | Erster Arm |
| 22 | Zweiter Arm |
| 23 | Dritter Arm |
| 24 | Vierter Arm |
| 25 | Rotationslager |
| 26 | Antrieb erste Transportelemente |
| 27 | Umlenkrollen |
| 28 | Grundkörper |
| 29 | Linearführungselement |
| 30 | Förderfläche |
| 31 | Luftfilter |
| 32 | Vorderer Motor |
| 33 | Hinterer Motor |

## Patentansprüche

1. Verfahren zur Herstellung mehrlagiger mit einer Streichmasse wie beispielsweise einer Creme gefüllter Waffelblöcke, bei welchem
- ein erster Waffelblockbestandteil (2) entlang einer Förderfläche (30) einer als Bandförderer oder als Riemenförderer ausgebildeten ersten Transportvorrichtung (1) mit einem angetriebenen Band (18) oder mit angetriebenen Riemen, das bzw. die über eine Umlenkrolle zurückgeführt ist bzw. sind, zu einem Stapelbereich (8) transportiert wird,
- dort von einer Greifvorrichtung (4) von der Förderfläche (30) abgehoben wird,
- wobei anschließend oder gleichzeitig ein zweiter Waffelblockbestandteil (3) entlang der Förderfläche (30) zu dem Stapelbereich (8) transportiert wird,
- wobei der erste Waffelblockbestandteil (2) auf den zweiten Waffelblockbestandteil (3) von oben in einem Fügevorgang aufgesetzt und angepresst wird,
- wobei der erste Waffelblockbestandteil (2) und der zweite Waffelblockbestandteil (3) zu jedem Zeitpunkt des Fügevorgangs dieselbe Geschwindigkeit in Förderrichtung (11) aufweisen, und wobei die Geschwindigkeit ungleich null ist,
**dadurch gekennzeichnet,**
- **dass** als Widerlager für den Druck bzw. die daraus resultierende Kraft ein in Förderrichtung (11) geführter Gegenhalter (14) vorgesehen ist,
- **und dass** der Gegenhalter (14) ebenso wie der Greifer (5) mit der Geschwindigkeit des ersten Waffelblockbestandteiles und des angetriebenen Bands (18) mitgeführt werden.

2. Verfahren nach Anspruch 1, **dadurch gekennzeichnet, dass**
- der erste Waffelblockbestandteil (2) von einer Greifvorrichtung (4) in einer in Förderrichtung (11) vorderen Position von der Förderfläche (30) abgehoben und in einer in Förderrichtung (11) hinteren Position auf einen nachfolgenden Waffelblockbestendteil aufgesetzt wird.

3. Verfahren nach einem der Ansprüche 1 oder 2, **dadurch gekennzeichnet, dass** der erste Waffelblockbestandteil (2) und der zweite Waffelblockbestandteil (3) gemeinsam von der Greifvorrichtung (4) in einer in Förderrichtung (11) vorderen Position von der Förderfläche (30) abgehoben und zu einer in Förderrichtung (11) hinteren Position auf einen nachfolgenden Waffelblockbestendteil aufgesetzt werden.

4. Verfahren nach einem der Ansprüche 1 bis 3, **dadurch gekennzeichnet, dass** die Waffelblockbestandteile von einer ersten Transportvorrichtung (1) in den Stapelbereich (8) transportiert werden.

5. Verfahren nach einem der Ansprüche 1 bis 4, **dadurch gekennzeichnet, dass** der erste Waffelblockbestandteil (2) aus zwei deckungsgleich, parallel übereinanderliegenden Waffelblättern gebildet ist, wobei zwischen den Waffelblättern zumindest eine Schicht aus einer Streichmasse wie beispielsweise einer Creme vorgesehen ist.

6. Verfahren nach einem der Ansprüche 1 bis 5, **dadurch gekennzeichnet, dass** der zweite Waffelblockbestandteil (3) aus einem Waffelblatt gebildet ist, welches auf einer Flachseite, bevorzugt auf der dem Greifer zugewandten Seite, eine Schicht aus einer Streichmasse wie beispielsweise eine Creme aufweist.

7. Vorrichtung zur Herstellung mehrlagiger mit einer Streichmasse wie beispielsweise einer Creme gefüllter Waffelblöcke,
- mit einer ersten Transportvorrichtung (1) zum Transport der Waffelblockbestandteile entlang der Förderfläche (30) in Förderrichtung (11)
- und einer Greifvorrichtung (4) zur Stapelung der Waffelblockbestandteile,
- wobei die Greifvorrichtung (4) einen Greifer (5) umfasst, der zumindest abschnittsweise entlang der Förderfläche (30) bewegbar angeordnet ist, **dadurch gekennzeichnet, dass**
ein Gegenhalter (14) vorgesehen ist, und dass der Gegenhalter (14) entlang der Förderfläche (30) in und gegen die Förderrichtung (11) verschiebbar angeordnet ist.

8. Vorrichtung nach Anspruch 7, **dadurch gekennzeichnet, dass** der Greifer (30) zumindest entlang zweier translatorischer Freiheitsgrade bewegbar ist.

9. Vorrichtung nach Anspruch 7 oder 8, **dadurch gekennzeichnet, dass** zumindest ein Greifarm zur Bewegung des Greifers (5) vorgesehen ist.

10. Vorrichtung nach einem der Ansprüche 7 bis 9, **dadurch gekennzeichnet, dass** die Greifarme jeweils zumindest einen Antrieb aufweisen.

11. Vorrichtung nach einem der Ansprüche 7 bis 10, **dadurch gekennzeichnet, dass** der Greifer (5) im Wesentlichen normal zum Gegenhalter (14) verschiebbar angeordnet ist.

12. Vorrichtung nach einem der Ansprüche 7 bis 11, **dadurch gekennzeichnet, dass** der Greifer (5) im Wesentlichen parallel zum Gegenhalter (14) translatorisch verschiebbar angeordnet ist.

13. Vorrichtung nach einem der Ansprüche 7 bis 12, **dadurch gekennzeichnet, dass** der Greifer (5) als Unterdruckplatte ausgeführt ist und Öffnungen aufweist, die zumindest teilweise von einem ersten Waffelblockbestandteil (2) verschließbar sind.

## Claims

1. A method for producing multi-layer wafer blocks filled with a coating mass, such as for example a cream, in which
- a first wafer block component (2) is transported to a stacking area (8) along a conveying surface (30) of a first transport apparatus (1) which is configured as a band conveyor or as a belt conveyor, with a driven band (18) or with driven belts which is and/or are guided back via a deflection roller,
- is lifted there by a gripping apparatus (4) from the conveying surface (30),
- wherein subsequently or simultaneously a second wafer block component (3) is transported along the conveying surface (30) to the stacking area (8),
- wherein the first wafer block component (2) is placed and pressed from above onto the second wafer block component (3) in a joining process,
- wherein the first wafer block component (2) and the second wafer block component (3) at any time of the joining process have the same speed in the direction of conveyance (11) and wherein the speed is non-zero,
**characterised**
- **in that** a counter-holder (14) which is guided in the direction of conveyance (11) is provided as an abutment for the pressure and/or the force resulting therefrom,
- and **in that** the counter-holder (14) as well as the gripper (5) are entrained at the speed of the first wafer block component and the driven band (18) .

2. The method according to Claim 1, **characterised in that**
- the first wafer block component (2) is lifted from the conveying surface (30) by a gripping apparatus (4) in a front position in the direction of conveyance (11) and is placed on a following wafer block component in a rear position in the direction of conveyance (11).

3. The method according to one of Claims 1 or 2, **characterised in that** the first wafer block component (2) and the second wafer block component (3) are lifted together from the conveying surface (30) by the gripping apparatus (4) in a front position in the direction of conveyance (11) and are placed onto a following wafer block component in a rear position in the direction of conveyance (11).

4. The method as claimed in one of claims 1 to 3, **characterised in that** the wafer block components are transported by a first transport apparatus (1) into the stacking area (8).

5. The method as claimed in one of claims 1 to 4, **characterised in that** the first wafer block component (2) is formed from two wafer sheets superimposed in a congruent and parallel manner, wherein at least one layer consisting of a coating mass, such as for example a cream, is provided between the wafer sheets.

6. The method as claimed in one of Claims 1 to 5, **characterised in that** the second wafer block component (3) is formed from a wafer sheet which has a layer consisting of a coating mass, such as for example a cream, on a flat side, preferably on the side facing the gripper.

7. An apparatus for producing multi-layer wafer blocks filled with a coating mass, such as for example a cream,
- comprising a first transport apparatus (1) for the transport of the wafer block components along the conveying surface (30) in the direction of conveyance (11)
- and a gripping apparatus (4) for stacking the wafer block components,
- wherein the gripping apparatus (4) comprises a gripper (5) which is arranged so as to be moveable at least partially along the conveying surface (30),
**characterised in that**
a counter-holder (14) is provided and **in that** the counter-holder (14) is displaceably arranged along the conveying surface (30) in and counter to the direction of conveyance (11).

8. The apparatus according to Claim 7, **characterised in that** the gripper (30) is movable along at least two translational degrees of freedom.

9. The apparatus according to Claim 7 or 8, **characterised in that** at least one gripping arm is provided for moving the gripper (5).

10. The apparatus according to one of claims 7 to 9, **characterised in that** the gripping arms in each case have at least one drive.

11. The apparatus according to one of claims 7 to 10, **characterised in that** the gripper (5) is displaceably arranged substantially perpendicular to the counter-holder (14).

12. The apparatus according to one of claims 7 to 11, **characterised in that** the gripper (5) is displaceably arranged in a translatory manner substantially parallel to the counter-holder (14).

13. The apparatus according to one of claims 7 to 12, **characterised in that** the gripper (5) is designed as a vacuum plate and comprises openings which are at least partially closable by a first wafer block component (2) .

## Revendications

1. Procédé de fabrication de blocs de gaufrettess à plusieurs couches remplis d'une masse d'enduction, comme par exemple une crème, pour lequel
- un premier composant de bloc de gaufrettes (2) est transporté vers une zone d'empilage (8) le long d'une surface de transport (30) d'un premier dispositif de transport (1) constitué comme un convoyeur à bande ou comme un convoyeur à courroie avec une bande entraînée (18) ou avec une courroie entraînée, qui est ou sont ramenée(s) par le biais d'un rouleau de renvoi,
- y est enlevé de la surface de transport (30) par un dispositif de préhension (4),
- un deuxième composant de bloc de gaufrettes (3) étant ensuite ou simultanément transporté le long d'une surface de transport (30) vers la zone d'empilage (8),
- le premier composant de bloc de gaufrettes (2) étant posé et comprimé par le haut dans une opération d'assemblage sur le deuxième composant de bloc de gaufrettes (3),
- le premier composant de bloc de gaufrettes (2) et le deuxième composant de bloc de gaufrettes (3) comportant à chaque moment de l'opération d'assemblage la même vitesse dans le sens de transport (11) et la vitesse n'étant pas égale à zéro,
**caractérisé en ce**
- **qu'**un contre-support (14) guidé dans le sens du transport (11) est prévu en tant que butée pour la pression ou la force en résultant,
- et en ce que le contre-support (14) tout comme le préhenseur (5) sont entraînés à la vitesse du premier composant de bloc de gaufrettes et de la bande entraînée (18).

2. Procédé selon la revendication 1, **caractérisé en ce que**
- le premier composant de bloc de gaufrettes (2) est enlevé par un dispositif de préhension (4) dans une position avant de la surface de transport (30) dans le sens du transport (11) et est déposé dans une position arrière sur un composant de bloc de gaufrettes suivant dans le sens du transport (11).

3. Procédé selon l'une quelconque des revendications 1 ou 2, **caractérisé en ce que** le premier composant de bloc de gaufrettes (2) et le deuxième composant de bloc de gaufrettes (3) sont enlevés ensemble par le dispositif de préhension (4) dans une position avant de la surface de transport (30) dans le sens du transport (11) et sont déposés dans une position arrière sur un composant de bloc de gaufrettes suivant dans le sens du transport (11).

4. Procédé selon l'une quelconque des revendications 1 à 3, **caractérisé en ce que** les composants de bloc de gaufrettes sont transportés par un premier dispositif de transport (1) dans la zone d'empilage (8).

5. Procédé selon l'une quelconque des revendications 1 à 4, **caractérisé en ce que** le premier composant de bloc de gaufrettes (2) est formé de deux feuilles de gaufrettes de couverture identique, se superposant parallèlement, au moins une couche d'une masse d'enduction, comme par exemple une crème, étant prévue entre les feuilles de gaufrettes.

6. Procédé selon l'une quelconque des revendications 1 à 5, **caractérisé en ce que** le deuxième composant de bloc de gaufrettes (3) est formé d'une feuille de gaufrettes, laquelle comporte sur un côté plat, de préférence sur le côté tourné vers le préhenseur, une couche d'une masse d'enduction comme par exemple une crème.

7. Dispositif pour la fabrication d'un bloc de gaufrettes à plusieurs couches rempli d'une masse d'enduction comme par exemple une crème,
- avec un premier dispositif de transport (1) pour le transport des composants de bloc de gaufrettes le long de la surface de transport (30) dans le sens du transport (11),
- et un dispositif de préhension (4) pour l'empilage des composants du bloc de gaufrettes,
- le dispositif de préhension (4) comprenant un préhenseur (5), qui est disposé mobile au moins par section le long de la surface de transport (30),
**caractérisé en ce qu'**
un contre-support (14) est prévu et **en ce que** le contre-support (14) est disposé pouvant se déplacer le long de la surface de transport (30) et contre la surface de transport (11).

8. Dispositif selon la revendication 7, **caractérisé en ce que** le préhenseur (30) est mobile au moins le long de deux degrés de liberté translatoires.

9. Dispositif selon la revendication 7 ou 8, **caractérisé en ce qu'**au moins un bras de préhension est prévu pour le déplacement du préhenseur (5).

10. Dispositif selon l'une quelconque des revendications 7 à 9, **caractérisé en ce que** les bras de préhension comportent respectivement au moins un entraînement.

11. Dispositif selon l'une quelconque des revendications 7 à 10, **caractérisé en ce que** le préhenseur (5) est disposé pour l'essentiel pouvant se déplacer normalement par rapport au contre-support (14).

12. Dispositif selon l'une quelconque des revendications 7 à 11, **caractérisé en ce que** le préhenseur (5) est disposé pour l'essentiel pouvant se déplacer de façon translatoire parallèlement au contre-support (14).

13. Dispositif selon l'une quelconque des revendications 7 à 12, **caractérisé en ce que** le préhenseur (5) est exécuté comme une plaque à dépression et comporte des ouvertures, qui peuvent être fermées au moins en partie par un premier composant de bloc de gaufrettes (2) .
